# EUROPÄISCHE PATENTSCHRIFT

(11) **EP 4 061 608 B1**
(45) Veröffentlichungstag und Bekanntmachung des Hinweises auf die Patenterteilung: **10.04.2024**
(21) Anmeldenummer: 21703406.5
(22) Anmeldetag: 02.02.2021
(51) Int. Cl.: B29C 48/025, B29C 48/25, B29C 48/265

(54) **VORRICHTUNG UND VERFAHREN ZUR POSITIONIERUNG VON MODULKÖRPERN EINER EXTRUSIONSLINIE**
DEVICE AND METHOD FOR POSITIONING MODULE BODIES OF AN EXTRUSION LINE
DISPOSITIF ET PROCÉDÉ DE POSITIONNEMENT DE CORPS DE MODULE D'UNE LIGNE D'EXTRUSION

(43) Veröffentlichungstag der Anmeldung: 28.09.2022
(73) Patentinhaber: battenfeld-cincinnati Germany GmbH, 32547 Bad Oeynhausen (DE)
(72) Erfinder: DOHMANN, Heinrich, 32547 Bad Oeynhausen (DE); WEBER, Leila-Elisabeth, 32427 Minden (DE)
(86) Internationale Anmeldenummer: PCT/EP2021/052452
(87) Internationale Veröffentlichungsnummer: WO 2022/167060

(56) Entgegenhaltungen:
- WO-A1-2006/060837

## Beschreibung

Die Erfindung betrifft eine Vorrichtung zum Verfahren von Modulkörpern einer Extrusionslinie die mindestens umfasst: ein Fahrwerk, mit mindestens zwei Laufrollen, eine Verbindungseinheit zum Verbinden des Fahrwerkes mit dem Modulkörper, wobei mittels der Laufrollen der Modulkörper auf Schienen verschiebbar ist, sowie ein Verfahren zum Verstellen.

Zur Herstellung von Kunststoffendlosprodukten, wie Kunststoffrohre, kommen modulartig aufgebaute Extrusionslinien zum Einsatz. Hierbei erstreckt sich, beginnend vom Extruder, entlang einer Extrusionslinie, in der Regel Module, wie das Formwerkzeug, eine Kalibrierung, mehrere Kühltanks, eine Trendvorrichtung sowie ein Abzug. Hierbei ist es erforderlich, dass alle nacheinander angeordneten Module, sich bezüglich des Zentrums des zu fertigen Endlosproduktes, auf einer Geraden, der Extrusionsachse, befinden. Üblicherweise kann jedes der Module über Laufrollen mittels eines Schienensystems in Richtung der Extrusionsachse verschoben werden. Es ist weiterhin erforderlich, dass jedes einzelne Modul auch in den beiden anderen Koordinatenachsen, also der Breite und der Höhe, justiert werden können, damit das Zentrum für das zu erzeugenden Endlosproduktes, aller eingesetzten Module, übereinstimmt.

Die heute eingesetzten Fahrwerke verfügen über sehr komplex bauende Verstellsysteme und umfassen weiterhin eine Vielzahl von verbaut Teilen und sind somit relativ aufwendig zu fertigen.

Aus dem Stand der Technik sind ähnliche Fahrwerke bekannt, so offenbart die DE 10 2005 009 276 B4 eine Blasformeinrichtung die auf Schienen angeordnet ist und über weitere Schienen eine Trageeinrichtung aus einer Arbeitsstellung in eine Zentralstellung verfahrbar ist.

WO 2006/060837 A1 offenbart den Oberbegriff des Anspruchs 1.

Auf gab e der Erfindung ist es, die bekannte Vorrichtung, sowie das bekannte Verfahren zum Positionieren der Nachfolgemodule, innerhalb einer Exkursionslinie, derart weiterzubilden, dass eine einfache Verstellmöglichkeit erzielt wird, wenig Bauteile eingesetzt werden müssen und dadurch kostengünstiger herzustellen ist.

Die Lös u n g der Aufgabe bezüglich der Vorrichtung ist in Verbindung mit dem Oberbegriff des Anspruches 1 dadurch gekennzeichnet, dass die Modulkörper sich entlang einer Extrusionsachse erstrecken, dass Fahrwerk eine Verstelleinheit umfassenden, mittels der der Modulkörper in seiner Lage relativ zu den Laufrollen verstellbar ist, die Verstelleinheit eine Achse sowie einen ersten und einen zweiten Lagerbock umfasst, wobei Laufrollen an der Achse angeordnet sind, wobei die Verbindung der Achse zum ersten Lagerbock so ausgeführt ist, dass ein Abstand zwischen zwei Ebenen veränderbar ist.

Durch diese erfindungsgemäße Vorrichtung wird eine einfache Querverschiebung der Module innerhalb einer Extrusionslinie und damit die Positionierung bezogen auf die Extrusionsachse ermöglicht. Weiterbildungsgemäß ist vorgesehen, dass die Verbindung der Achse zum ersten Lagerbock als Gewinde ausgeführt ist. Es ist noch möglich diese Verbindung als Linearführung auszugestalten. Hiermit wird also erreicht, dass eine direkte Verstellung über die Achse die mit den Laufrollen und dem Modulkörper in Verbindung steht direkt im Abstand zu verändert. Bei der Ausführung als Gewinde wird durch Drehen der Achse der erste Lagerbock in Richtung der Achsausrichtung verschoben und somit der relative Abstand des Modulkörpers zur Position der Laufrolle geändert. Bei der Ausführung als lineare Führung kann die Achse ähnlich wie bei Zylinder ausgeführt sein und somit ebenfalls durch Verschieben der Zylinderstange zum Zylinderkörper der Abstand zwischen erstem Lagerbock und der Laufrolle geändert werden. Ebenfalls ist eine Ausführung als Zahnstange an der wiederum die Laufrolle angeordnet ist und einem Gehäuse Zahnrad an den der erste Lagerbock angeordnet ist, durch Drehen des Zahnrades und damit Verschieben der Zahnstange der Abstand zwischen erstem Lagerbock und der Laufrolle geändert werden.

Damit das Verschieben des gesamten Modulkörpers möglich ist, ist weiterhin vorgesehen dass die Achse zweiten Lagerbock verdreh- und verschiebbar ist. Es wird somit erreicht, dass bei Veränderung des Abstandes der Laufrolle zum ersten Lagerbock die Achse auch im zweiten Lagerbock leicht gedreht und verschoben werden kann. Vorteilhafter Weise entspricht diese Lagerung eine Gleitlager, wobei dies nicht zwingend klassische Rollen- oder Rillenkugellager sein müssen.

Weiterbildungsgemäß ist vorgesehen, dass der Modulkörper ein Vakuum- und/oder Kalibriertank ist. Das Erfordernis der angesprochenen Verstellung ist vor allem bei diesen Modulen erforderlich, da hier eine genaue Ausrichtung zur Extrusionsachse erforderlich ist.

Weitere Ausführung, insbesondere die Möglichkeit einer Höhenverstellung, ist in den Unteransprüchen wiedergegeben.

Die Lös u n g der Aufgabe bezüglich des Verfahrens ist in Verbindung mit dem Oberbegriff des Anspruches 11, dadurch gekennzeichnet, dass der Modulkörper eine konstruktive Mittelebene umfasst und diese Mittelebene eine Ebene entlang eine Extrusionsachse ist, die an eine Achse angeordnete Laufrolle eine konstruktive Ebene umfasst, die eine parallele Ebene zur Mittelebene des Modulkörpers ist und senkrecht zu einer Auflageebene der Schienen angeordnet ist, die wobei die Achse im Fahrwerk derart bewegt wird, dass ein erster Lagerbock entlang der Achse verschoben wird, wodurch der Abstand zwischen der Ebene, die der Laufrolle zugeordnet ist und der Mittelebene, die die Modulkörper zugeordnet ist, verändert wird.

Mittels dieses Verfahrens wird eine einfache Querverschiebung der Module innerhalb einer Extrusionslinie und damit die Positionierung bezogen auf die Extrusionsachse ermöglicht.

In Verbindung mit den in den weiteren Unteransprüchen wiedergegebenen Höhenverstellung bietet das Verfahren die Möglichkeit, einen Modulkörper mit einem vorherrschen Zentrum für die Erzeugung eines extrudierten Endlosproduktes, durch einfaches Verstellen in zwei Koordinatenachsen - hier wie in den Figuren wiedergegeben in der XY-Ebene - mit der Flucht der Extrusionsachse in Übereinstimmung zu bringen. Diese Verstellmöglichkeit kann auch noch im laufenden Prozess vorgenommen werden, sofern eine Feinjustierung erforderlich ist.

In den Zeichnungen wird schematisch eine erfindungsgemäße Vorrichtung gezeigt:
- Fig. 1: zeigt eine typische Extrusionslinie
- Fig. 2: eine schematische Darstellung eines Moduls
- Fig. 3: die Figur 2 in der Seitenansicht
- Fig. 4: ein Fahrwerk gemäß dem Stand der Technik
- Fig. 5: das erfindungsgemäße Fahrwerk
- Fig. 6: das Fahrwerk gemäß Figur 5 in einer Schnittdarstellung
- Fig. 7: die Einzelheit A aus Figur 6
- Fig. 8: die Einzelheit B aus Figur 6

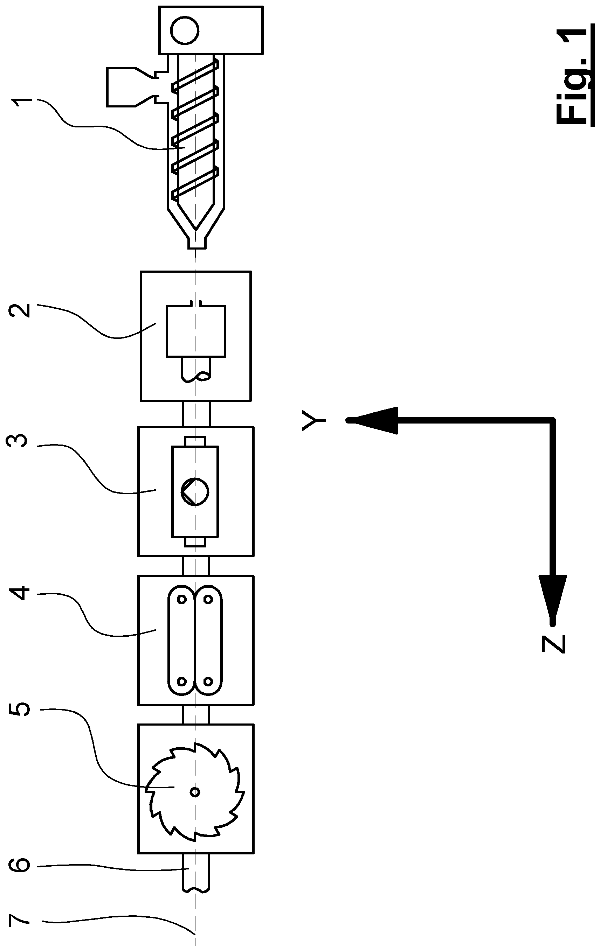

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden, anschließend ist eine Trennvorrichtung 5 angeordnet. Die Extrusionsachse ist mit der Positionsziffer 7 gekennzeichnet.

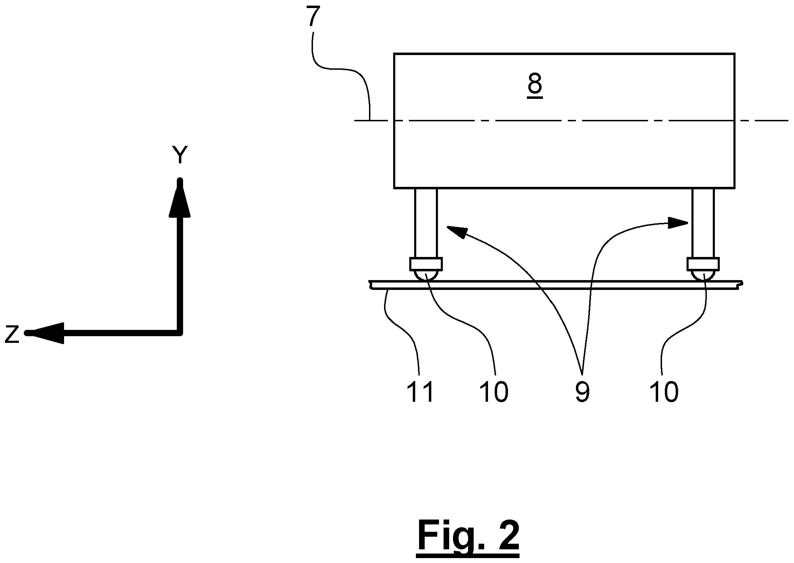

Figur 2 zeigt die schematische Darstellung eines beliebigen Moduls. Das Modul umfasst einen Modulkörper 8 der auf zwei Fahrwerken 9 aufgesetzt ist und über Laufrollen 10 auf Schienen 11 entlang einer Z-Achse verschiebbar ist.

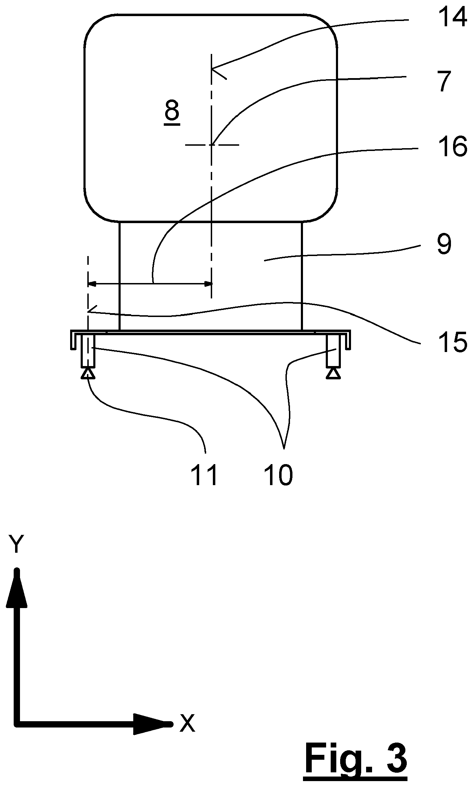

Figur 3 zeigt die Seitenansicht des schematisch dargestellten Moduls gemäß Figur 2. Der Modulkörper 8 ist mit dem Fahrwerk 9 verbunden, welches wiederum zwei Laufrollen 10 umfasst, die auf Schienen 11 abrollen. Durch das Zentrum des Modulkörpers 8 verläuft die Extrusionsachse 7. Durch dieses Zentrum und entlang der Extrusionsachse 7 erstreckt sich eine Mittelebene 14. Eine weitere Ebene 15 durchläuft die Laufrolle 10 und ist parallel zur Mittelebene 14 angeordnet. Beide Ebenen sind senkrecht zur Auflageebene, z. B. dem Hallenboden, der Schienen 11. Der Abstand 16 der beiden Ebenen erstreckt sich entlang der X-Achse.

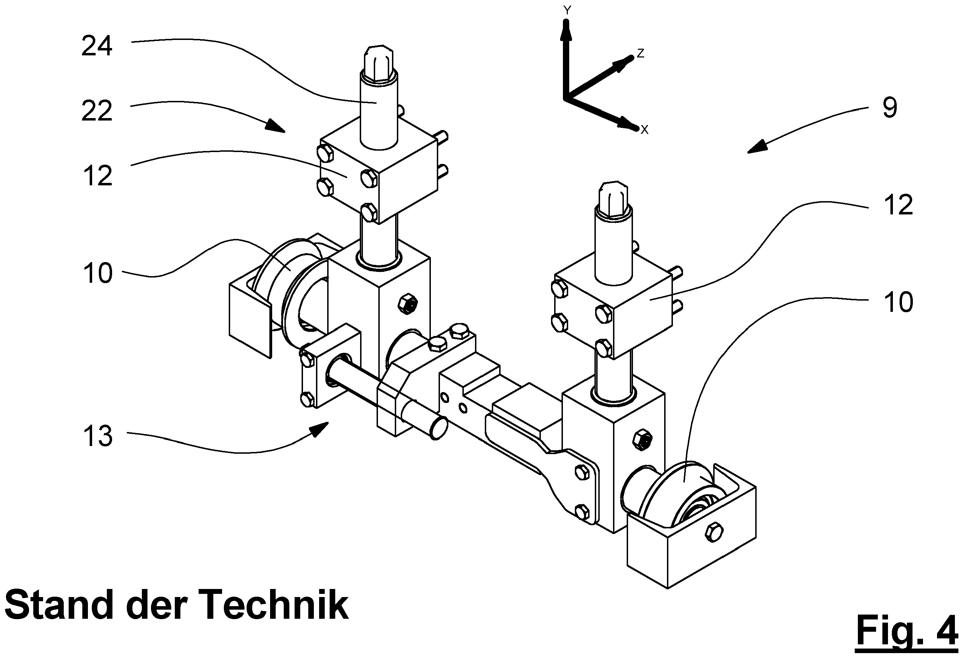

Figur 4 zeigt ein Fahrwerk 9 gemäß dem Stand der Technik. Über die beiden Verbindungseinheiten 12 wird der Modulkörper 8 mit dem Fahrwerk verbunden und kann entlang der Stangen 24 und somit in der Y-Achse, also in der Höhe, verstellt werden. Das Fahrwerk 9 verfügt über zwei Laufrollen 10 die an einer Achse angeordnet sind. Über die Verstelleinheit 13 kann die Lage des gesamten Moduls, in Bezug auf die Laufrollen 10, also in X-Richtung, verstellt werden.

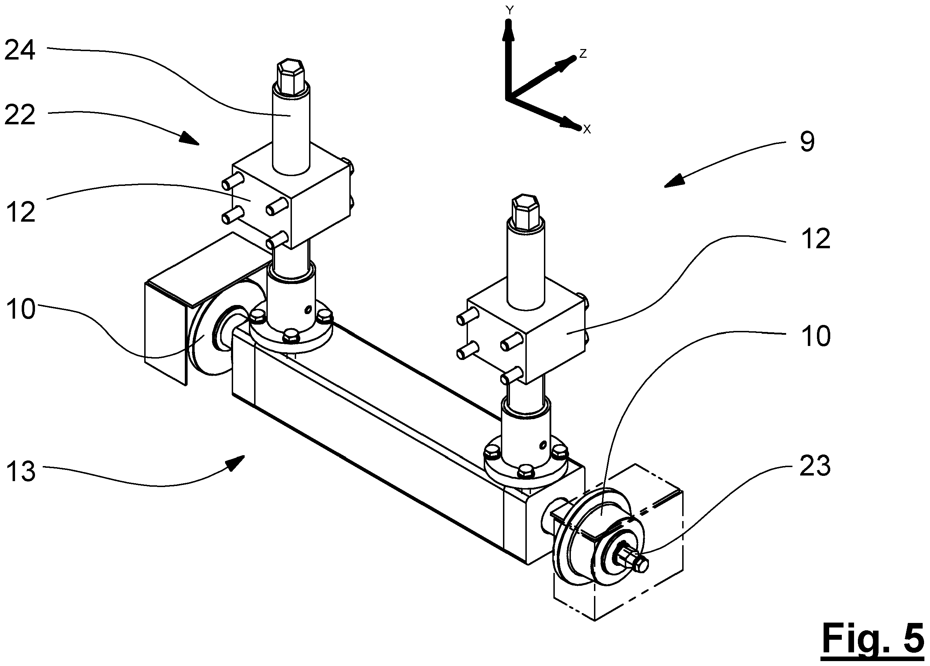

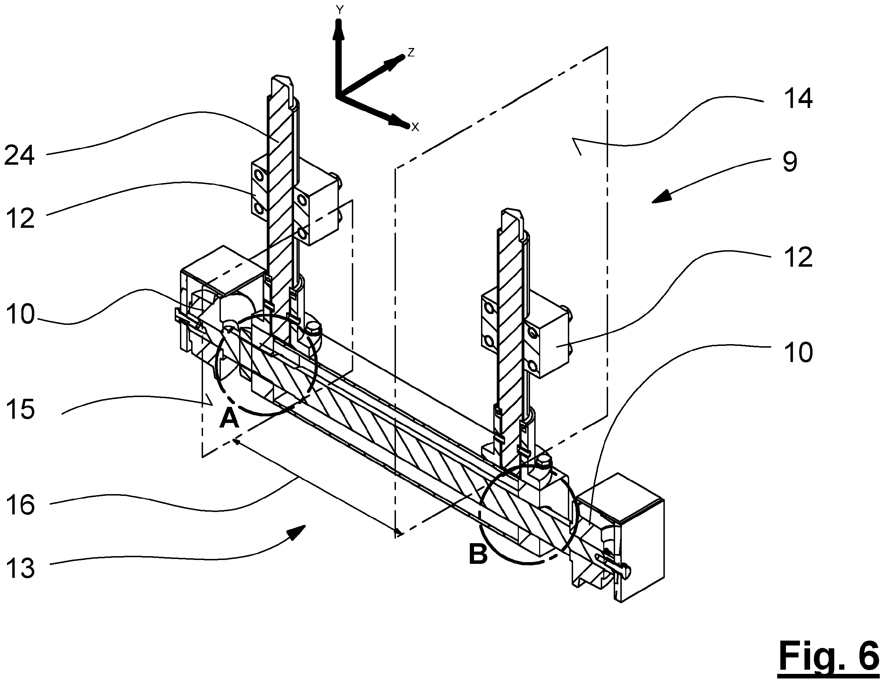

Figur 5 zeigt das erfindungsgemäße Fahrwerk. Wie beim bekannten Stand der Technik, wird mittels der Verbindungseinheiten 12 der Modulkörper 8 mit dem Fahrwerk 9 verbunden und kann entlang der Stangen 24 in der der Y-Achse verstellt werden. Die Stange 24 und die Verbindungseinheit 12 bilden eine Höhenverstellungseinheit 22. Das Fahrwerk 9 verfügt ebenfalls über Laufrollen 10 die an einer Achse, in diese Darstellung durch den Kasten verdeckt, angeordnet sind. Die erfindungsgemäße Verstelleinheit 13 wird in den nachfolgend beschriebenen Figuren 6 bis 8 detaillierte wiedergegeben. Zur Betätigung der Verstelleinheit 13 verfügt die Achse 17 über eine Profilierung 23. Über diese Profilierung 23, die hier beispielhaft als Sechskant ausgeführt ist, kann die Achse 17, unter Zuhilfenahme eines Werkzeuges, verdreht werden.

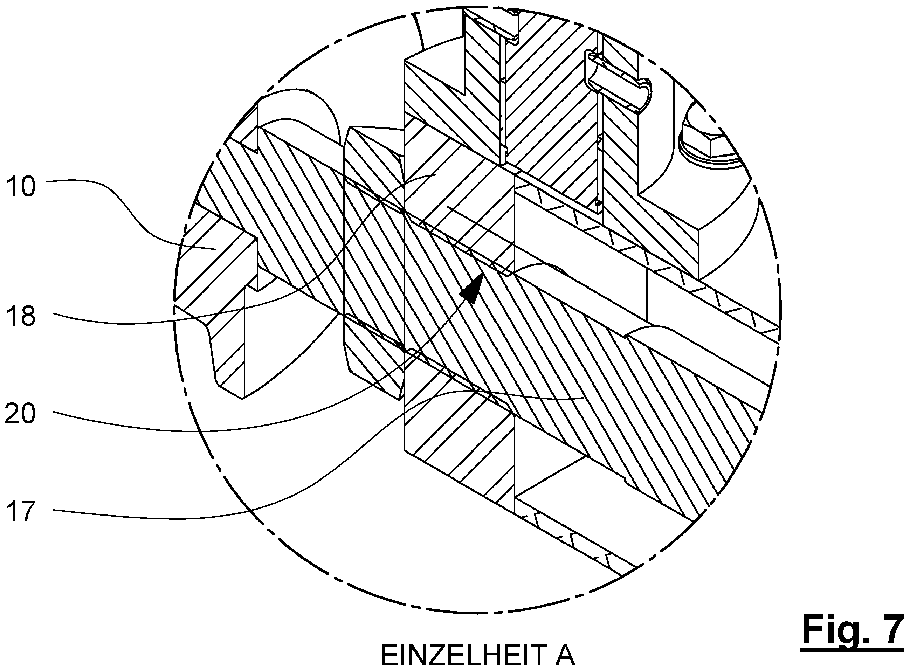

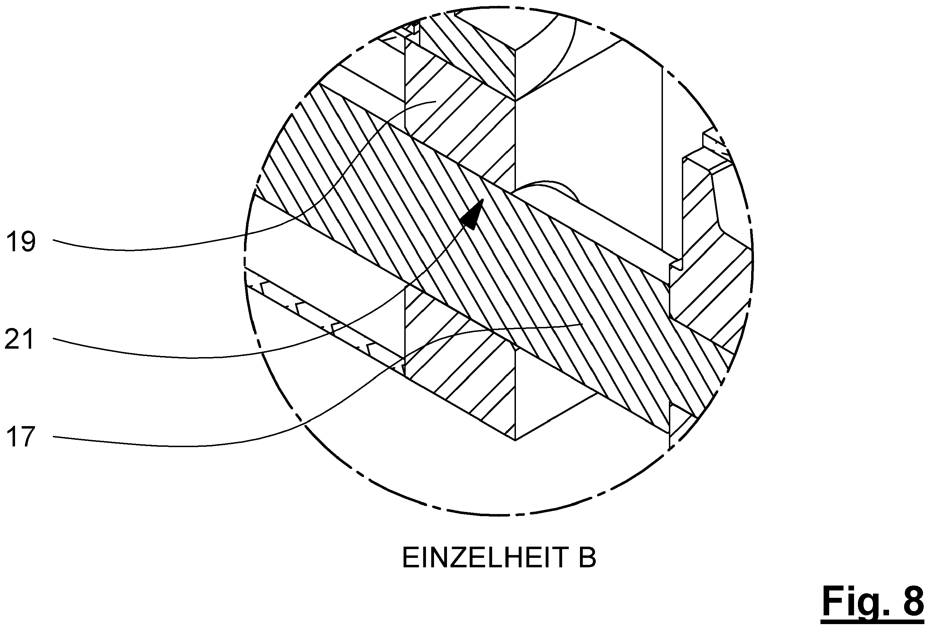

Figur 6 entspricht der Figur 5 in einer Schnittdarstellung. Die Befestigung des Modulkörpers 8, sowie die Verstellung in der Y-Achse wurden bereits in der Beschreibung zu Figur 5 detaillierte wiedergegeben. Gleiche Teile sind mit den gleichen Positionsziffern gekennzeichnet. Die Verstelleinheit 13 ist direkt auf der Achse 17 angeordnet und ermöglicht die Veränderung des Abstandes 16 zwischen den beiden strichpunktiert dargestellten konstruktiven Ebenen. Eine Ebene 15 erstreckt sich in YZ-Richtung und schneidet die Laufrolle 10. Die Mittelebene 14 erstreckt sich ebenfalls in YZ-Richtung und liegt auf der Extrusionsachse 7. Sie schneidet das Zentrum des Modulkörpers 8. Zur Verdeutlichung der beiden Verbindungsstellen der Achse 17 innerhalb des Fahrwerks 9 sind zwei Einzelheiten A und B in den Figuren 7 und 8 wiedergegeben

Die Figur 7 zeigt die Einzelheit A gemäß Figur 6. An der Achse 17 ist das Laufrad 10 angeordnet und die Achse 17 ist über ein Gewinde 20 mit einem ersten Lagerbock 18 verbunden. Durch Rotation der Achse 17 um ihre eigene Achse wird der erste Lagerbock 18 entlang der Achse 17 verschoben und somit der relative Abstand zum Laufrad 10 verändert. Die Einzelheit B ist in der Figur 8 dargestellt, sie zeigt die Verbindung der Achse 17 zum zweiten Lagerbock 19 in Form eines Gleitlagers 21. Es ist hier nicht erforderlich eine spezielle Lagertechnik einzusetzen. Ein sauber gefertigter Achsenabschnitt mit einer glatten Oberfläche in eine ausreichend dimensionierten Bohrung im zweiten Lagerblock 19, verbunden mit einer ausreichenden Schmierung, sollte hier, für die benötigte Gleiteigenschaft, bei der Verstellung genügen.

Die erfindungsgemäße Vorrichtung ermöglicht eine einfache direkte Verstellung und kommt mit wesentlich weniger Bauteile aus. Die im Stand der Technik bekannte Verstellung erfordert zusätzliche Bauteile, und ermöglicht nur eine indirekte Verstellung. Derartige Verstelleinrichtungen sind neben dem Fahrwerk angeordnet und vom Wirkungsgrad ungünstiger, da durch die Beabstandung zusätzlich auch Biegekräfte entstehen. Die Lagerungen beim Einsatz der zusätzlichen Verstellachse müssen wesentlich exakter sein, damit, durch die auftretenden Biegekräfte, sich die beweglichen Teile nicht verklemmen und somit eine Verstellung unmöglich machen.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: Extrusionsachse
- 8: Modulkörper
- 9: Fahrwerk
- 10: Laufrolle
- 11: Schiene
- 12: Verbindungseinheit zu 8
- 13: Verstelleinheit
- 14: Mittelebene von 8
- 15: Ebene durch 10
- 16: Abstand von 14 zu 15
- 17: Achse von 9
- 18: erster Lagerblock
- 19: zweiter Lagerblock
- 20: Gewinde
- 21: Gleitlager
- 22: Höhenverstelleinheit für 8
- 23: Profilierung von 17
- 24: Stange

## Patentansprüche

1. Vorrichtung zum Verfahren von Modulkörpern (8) einer Extrusionslinie die mindestens umfasst:
ein Fahrwerk (9), mit mindestens zwei Laufrollen (10),
eine Verbindungseinheit (12) zum Verbinden des Fahrwerkes (9) mit dem Modulkörper (8),
wobei mittels der Laufrollen (10) der Modulkörper (8) auf Schienen (11) verschiebbar ist,
wobei die Modulkörper (8) sich entlang einer Extrusionsachse (7) erstrecken,
das Fahrwerk (9) eine Verstelleinheit (13) umfasst, mittels der der Modulkörper (8) in seiner Lage relativ zu den Laufrollen (10) verstellbar ist,
**dadurch gekennzeichnet, dass** die Verstelleinheit (13) eine Achse (17) sowie einen ersten und einen zweiten Lagerbock (18, 19) umfasst,
wobei Laufrollen (10) an der Achse (17) angeordnet sind,
wobei die Verbindung der Achse (17) zum ersten Lagerbock (18) so ausgeführt ist, dass ein Abstand (16) zwischen zwei Ebenen (14, 15) veränderbar ist.

2. Vorrichtung nach Anspruch 1, **dadurch gekennzeichnet, dass** die Verbindung der Achse (17) zum ersten Lagerbock (18) als Gewinde ausgeführt ist.

3. Vorrichtung nach Anspruch 1, **dadurch gekennzeichnet, dass** die Verbindung der Achse (17) zum ersten Lagerbock (18)als Linearführung ausgeführt ist.

4. Vorrichtung nach einem der Ansprüche 1 bis 3, **dadurch gekennzeichnet, dass** die Achse (17) im zweiten Lagerbock (19) verdreh- und verschiebbar angeordnet ist.

5. Vorrichtung nach Anspruch 4, **dadurch gekennzeichnet, dass** die Achse (17) im zweiten Lagerbock (18) in einem Gleitlager angeordnet ist.

6. Vorrichtung nach mindestens einem der vorigen Ansprüche,
**dadurch gekennzeichnet, dass** die Achse (17) einen Abschnitt mit einer Profilierung (23) aufweist, um mittels eines Werkzeuges die Achse (17) zu drehen.

7. Vorrichtung nach einem der vorigen Ansprüche, **dadurch gekennzeichnet, dass** die Profilierung an einem Ende der Achse (17) angeordnet ist.

8. Vorrichtung nach einem der vorigen Ansprüche, **dadurch gekennzeichnet, dass** das Fahrwerk (9) eine Verbindungseinheit (12) umfasst, mittels der der Modulkörper (8) mit dem Fahrwerk (9) verbindbar ist.

9. Vorrichtung nach Anspruch 8, **dadurch gekennzeichnet, dass** die Verbindungseinheit (12) und eine Stange (24) eine Höhenverstelleinheit (22) für den Modulkörper (8) bilden.

10. Vorrichtung nach einem der vorigen Ansprüche, **dadurch gekennzeichnet, dass** der Modulkörper (8) ein Vakuum- und/oder Kalibriertank ist.

11. Verfahren zum Verstellen des relativen Abstandes eines Modulkörpers (8) einer Extrusionslinie zu Laufrollen (10) innerhalb eines Fahrwerkes (9),
wobei der Modulkörper (8) mittels der Laufrollen (10) auf Schienen (11) verfahren wird,
**dadurch gekennzeichnet, dass**
der Modulkörper (8) eine konstruktive Mittelebene (14) umfasst und diese Mittelebene (14) eine Ebene entlang einer Extrusionsachse (7) ist,
die an einer Achse (17) angeordnete Laufrolle (10) eine konstruktive Ebene (15) umfasst, die eine parallele Ebene zur Mittelebene (14) des Modulkörpers (8) ist und senkrecht zu einer Auflageebene der Schienen (11) angeordnet ist,
wobei die Achse (17) im Fahrwerk (9) derart bewegt wird, dass ein erster Lagerbock (18) entlang der Achse (17) verschoben wird,
wodurch der Abstand zwischen der Ebene (15), die der Laufrolle (10) zugeordnet ist und der Mittelebene (14), die dem Modulkörper (8) zugeordnet ist, verändert wird.

12. Verfahren nach Anspruch nach Anspruch 11, **dadurch gekennzeichnet, dass** die Achse (17) im Fahrwerk (9)gedreht wird, um den ersten Lagerbock (18) entlang der Achse (17) zu verschieben,

13. Verfahren nach Anspruch nach Anspruch 11 oder 12, **dadurch gekennzeichnet, dass** über eine Höhenverstelleinheit (22) der angeordnet Modulkörper (8) im Abstand zur Auflagefläche der Schienen (11) verändert wird.

14. Verfahren nach Anspruch 11 oder 12 und 13, **dadurch gekennzeichnet, dass** ein im Modulkörper (8) vorherrschendes Zentrum für die Erzeugung eines extrudierten Endlosproduktes durch Verstellen in zwei Koordinatenachsen mit der Flucht der Extrusionsachse (7) in Übereinstimmung gebracht wird.

## Claims

1. Apparatus for moving body modules (8) of an extrusion line, comprising at least:
a running device (9) with at least two track rollers (10),
a connector unit (12) to connect the running device (9) with the body module (8),
the body module (8) being movable on rails (11) by means of the track rollers (10),
the body modules (8) extending along the extrusion axis (7),
the running device comprising an adjustment unit (13) by means of which the position of the body module (8) relative to the track rollers (10) can be adjusted,
**characterized in that**
the adjustment unit (13) comprises a shaft (17) as well as a first and a second bearing block (18, 19),
the track rollers (10) being mounted on the shaft (17),
the connection between the shaft (17) and the first bearing block (18) being designed such that a distance (16) between two planes (14, 15) can be adjusted.

2. Apparatus according to claim 1, **characterized in that** the connection between the shaft (17) and the first bearing block (18) is designed as a thread.

3. Apparatus according to claim 1, **characterized in that** the connection between the shaft (17) and the first bearing block (18) is designed as a linear guidance.

4. Apparatus according to one of the claims 1 to 3, **characterized in that** the shaft (17) is arranged within the second bearing block (19) so as to be rotatable and shiftable.

5. Apparatus according to claim 4, **characterized in that** the shaft (17) in the second bearing block (18) is mounted inside a plain bearing.

6. Apparatus according to at least one of the previous claims, **characterized in that** the shaft (17) features a profiled section (23) so as to rotate the shaft (17) by means of a tool.

7. Apparatus according to one of the previous claims, **characterized in that** the profile is arranged at one end of the shaft (17).

8. Apparatus according to at least one of the previous claims, **characterized in that** the running device (9) comprises a connector unit (12) by means of which the body module (8) can be connected to the running device (9).

9. Apparatus according to claim 8, **characterized in that** the connector unit (12) and a rod (24) form a height adjustment unit (22) for the body module (8).

10. Apparatus according to one of the previous claims, **characterized in that** the body module (8) is a vacuum and/or calibration tank.

11. Process for adjusting the relative distance between a body module (8) of an extrusion line and track rollers (10) within a running device (9),
the body module (8) being driven by means of the track rollers (10) on rails (11),
**characterized in that**
the body module (8) comprises a constructive median plane (14) and that said median plane (14) is a plane along an extrusion axis,
that the track roller (10) which is mounted on a shaft (17) features a constructive plane (15) which is a parallel plane to the median plane (14) of the body module (8) and is arranged vertically to a support plane of the rails (11),
the shaft (17) being moved inside the running device (9) in such a way that a first bearing block (18) is shifted along the shaft (17),
by means of which the distance between the plane (15) that is assigned to the track roller (10) and the median plane (14) that is assigned to the body module (8) is adjusted.

12. Process according to claim 11, **characterized in that** the shaft (17) is rotated inside the running device (9) so as to shift the first bearing block (18) along the shaft (17).

13. Process according to claim 11 or 12, **characterized in that** the distance of the arranged body module (8) is adjusted in relation to the support plane of the rails (11) by means of a height adjustment unit (22).

14. Process according to claim 11 or 12 and 13, **characterized in that** a production area for the production of a continuous extruded product existing within the body module (8) is properly aligned with the extrusion axis (7) through an adjustment in the direction of two coordinate axes.

## Revendications

1. Dispositif pour déplacer des corps de module (8) d'une ligne d'extrusion qui comprend au moins:
un châssis (9) avec au moins deux roulettes (10),
une unité de connexion (12) afin de connecter le châssis (9) avec le corps de module (8),
ledit corps de module (8) étant déplaçable le long de rails (11) au moyen des roulettes (10),
les corps de module (8) s'étendant le long d'une axe d'extrusion (7),
le châssis (9) comprenant une unité de réglage (13) au moyen de laquelle la position relative du corps de module (8) par rapport aux roulettes (10) peut être ajustée,
**caratérisé en ce que**
l'unité de réglage comprend une axe (17) ainsi qu'un premier et un deuxième palier (18, 19),
des roulettes (10) étant agencées sur l'axe (17),
la connexion entre l'axe (17) et le premier palier (18) étant conçue pour qu'une distance (16) entre deux plans (14, 15) soit ajustable.

2. Dispositif selon la revendication 1, **caractérisé en ce que** la connexion entre l'axe (17) et le premier palier (18) est réalisé comme filetage.

3. Dispositif selon la revendication 1, **caractérisé en ce que** la connexion entre l'axe (17) et le premier palier (18) est réalisé comme guidage linéaire.

4. Dispositif selon l'une quelconque des revendications 1 à 3, **caractérisé en ce que** l'axe (17) est agencé dans le deuxième palier (18) de manière à être pivotant et déplaçable.

5. Dispositif selon la revendication 4, **caractérisé en ce que** l'axe (17) est agencé dans le deuxième palier (18) dans un palier lisse.

6. Dispositif selon au moins une des revendications précédentes, **caractérisé en ce que** l'axe montre une section avec profilage (23) afin de tourner l'axe au moyen d'un outil.

7. Dispositif selon l'une quelconque des revendications précédentes, **caractérisé en ce que** le profilage est réalisé à une extrémité de l'axe (17).

8. Dispositif selon l'une quelconque des revendications précédentes, **caractérisé en ce que** le châssis (9) comprend une unité de connexion (12) au moyen de laquelle le corps de module (8) peut être relié à l'axe (17).

9. Dispositif selon la revendication 8, **caractérisé en ce que** l'unité de connexion (12) et une tige (24) forment une unité de réglage en hauteur (22) pour le corps de module (8).

10. Dispositif selon l'une quelconque des revendications précédentes, **caractérisé en ce que** le corps de module (8) est un réservoir sous vide et/ou un réservoir de calibrage.

11. Procédé pour l'ajustement de la distance relative entre le corps de module (8) d'une ligne d'extrusion et des roulettes (10) dans un châssis,
le corps de module (8) étant déplacé le long des rails (11) au moyen des roulettes (10),
**caractérisé en ce que**
le corps de module (8) comprend un plan médian constructif (14) et que ce plan médian (14) est un plan le long d'une axe d'extrusion (7),
que la roulette (10) agencée sur une axe (17) comprend un plan constructif (15) qui est un plan parallèle au plan médian (14) du corps de module (8) et qui est perpendiculaire à un plan d'appui des rails (11),
l'axe (17) étant déplacé dans le châssis (9) de telle manière qu'un premier palier (18) soit déplacé le long de l'axe (17),
la distance entre le plan (15) assigné à la roulette (10) et le plan médian (14) qui est assigné au corps de module (8) étant ainsi ajustée.

12. Procédé selon la revendication 11, **caractérisée en ce que** l'axe (17) est tourné dans le châssis (9) afin de déplacer le premier palier (18) le long de l'axe (17).

13. Procédé selon l'une quelconque des revendications 11 ou 12, **caractérisée en ce que** la distance du corps de module (8) au plan d'appui des rails (11) est ajusté au moyen d'une unité de réglage en hauteur (22).

14. Procédé selon les revendications 11 ou 12 et 13, **caractérisée en ce qu'**une zone de production d'un produit extrudé continu dans le corps de module (8) est alignée avec l'axe d'extrusion (7) par déplacement sur deux axes de coordonnées.
